Europäisches Patentamt

European Patent Office

Office européen des brevets

(11) Numéro de publication: **0 210 906**
A1

# (12) DEMANDE DE BREVET EUROPEEN

(21) Numéro de dépôt: 86401512.8

(22) Date de dépôt: 01.07.86

(51) Int. Cl.4: **B29C 45/13** , B29C 45/57

(30) Priorité: 19.07.85 FR 8511413
03.06.86 FR 8608307

(43) Date de publication de la demande:
04.02.87 Bulletin 87/06

(84) Etats contractants désignés:
AT BE CH DE GB IT LI LU NL SE

(71) Demandeur: Maissiat, Jean-Yves
Villa Milou Plage Marquet
F-06320 Cap d'Ail(FR)

(72) Inventeur: Maissiat, Jean-Yves
Villa Milou Plage Marquet
F-06320 Cap d'Ail(FR)

(54) **Procédé permettant de réaliser des pièces de grandes dimensions en matière plastique.**

(57) Le procédé selon l'invention consiste à gaver un moule (9) de matières thermoplastiques dont les parois (5) de l'empreinte (7) seront à une température qui sera comprise dans la fourchette de température de travail de la matière.

Ensuite, dès que l'empreinte (7) sera uniformément remplie, il faudra en différents endroits déterminés suivant un rapport épaisseur surface de l'empreint (7) appliquer un compactage et une pression de maintien que débutera avec le refroidissement des parois (5) du moule (9) et que, dans le meilleur des cas sera l'application d'un diagramme : pression, volume, température.

Après démoulage, le produit obtenu aura donc les mêmes caractéristiques techniques qu'une pièce de même matière de petite dimension obtenue par injection traditionnelle. La suppression des pressions d'injection apporte la suppression du verrouillage traditionnellement utilisé.

L'utilisation du procédé permet donc de concevoir des pièces en thermoplastiques jusqu'alors irréalisables.

Le procédé pourra être aussi utilisé dans le cas de certains thermodurcissables se transformant de la même façon que les thermoplastiques.

## PROCEDE PERMETTANT DE REALISER DES PIECES DE GRANDES DIMENSIONS EN MATIERES PLAS-TIQUES

La présente invention concerne un procédé permettant la réalisation de pièces de grandes et de très grandes dimensions en matières thermoplastiques.

Le moulage par injection traditionnel des matières thermoplastiques met en cause des pressions considérables qui sont en outre celle du verrouillage du moule (9) pour éviter que celui-ci ne s'ouvre au moment de l'injection de la matière qui est sous pression.

Le moulage par injection traditionnel a donc pour gros inconvénient de nécessiter l'utilisation de machines dites presses à injecter qui restent dans la meilleur des cas, relativement limitées en ce qui concerne la fabrication de pièces de grandes dimensions en matières plastiques.

Le procédé selon l'invention consiste à gaver un moule (9) de matières thermoplastiques dont les parois (5) de l'empreinte (7) seront à une température qui sera comprise dans la fourchette de température de travail de la matière.

Ensuite, dès que l'empreinte (7) sera uniformément remplie, il faudra, en différents endroits déterminés suivant un rapport épaisseur surface de l'empreinte (7), appliquer un compactage et une pression de maintien qui débutera avec le refroidissement des parois (5) du moule (9) et qui, dans le meilleur des cas, sera l'application d'un diagramme : pression, volume, température.

Après démoulage, le produit obtenu aura donc les mêmes caractéristiques techniques qu'une pièce de même matière de petite dimension obtenue par injection traditionnelle. La suppression des pressions d'injection apporte la suppression du verrouillage traditionnellement utilisé. L'utilisation du procédé permet donc de concevoir des pièces en thermoplastiques de très grandes dimensions jusqu'alors irréalisables.

Le procédé pourra être aussi utilisé dans le cas de certains thermodurcissables se transformant de la même façon que les thermoplastiques. pour l'utilisation des matières thermodurcissables qui se tranforment traditionnellement par injection, les options de température ne sont pas les mêmes que celles choisies pour les thermoplastiques. Elles sont définies à partir de critères tels que : la taille de l'empreinte, le volume, l'épaisseur maximum, la surface, le temps de remplissage, le type de matière utilisée.

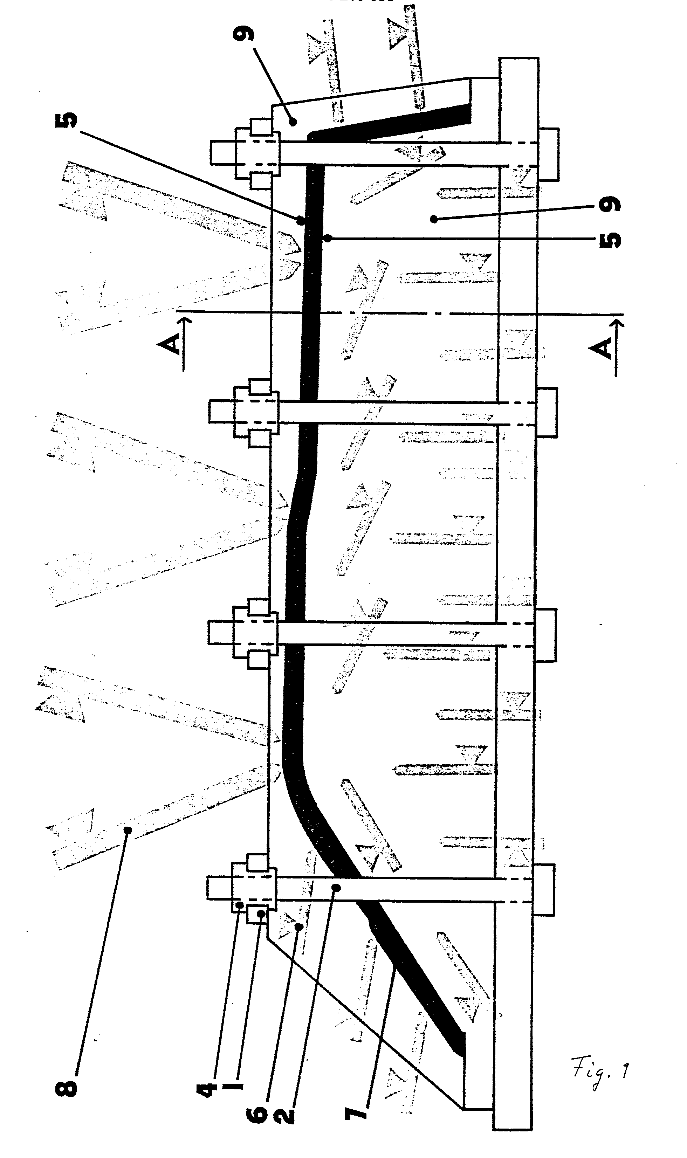

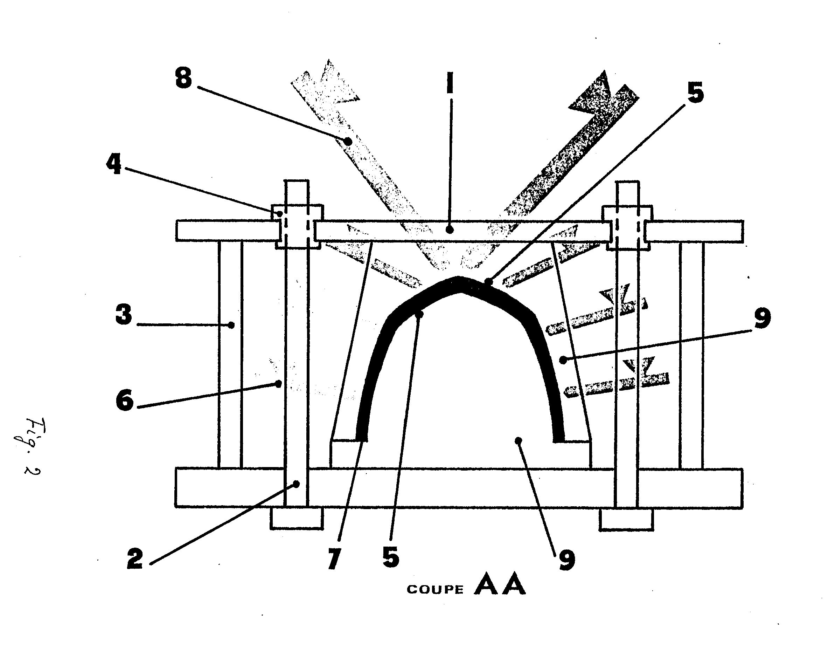

Il est donné, à titre d'exemple non limitatif, un mode de réalisation se référant au dessin ci-annexé.

Le moule (9) sera en tôle ou de type connu. Les matériaux qui constituent le moule sont des conducteurs thermiques qui peuvent être des alliages pour que les temps de chauffage et de refroidissement soient de très courtes durées; l'ensemble du moule y compris le système chauffage/refroidissement est calorifugé. L'ouverture, la fermeture, le verrouillage seront effectués hydrauliquement, mécaniquement ou électriquement ou en association. Dans le cas cité, les mouvements d'ouverture et fermeture sont effectués au palan. Le moule (9) est ensuite emmené sous son cadre de verrouillage qui est constitué de colonnes (2) de traverses (1) et d'écrous (4) de serrage qui effectuent le verrouillage. Des tasseaux (3) distribués autour du moule (9) empêchent l'écrasement de celui-ci. Les surfaces (5) de l'empreinte (7) sont chauffées par un système d'irrigation de fluide calorifique ou électriquement, et départagées en zones très distinctes, ce qui permettra au moment du refroidissement d'avoir un échange calorifique régulier sur toutes les surfaces (5), pour cela le fluide de chauffage sera enlevé et remplacé par un fluide de refroidissement.

Les zones de contact surface/moule avec les dispositifs de compactage et maintien en pression sont régulés en température indépendemment des surfaces de l'empreinte. Dans le cas des thermoplastiques, les zones de contact du moule avec les dispositifs qui effectuent le compactage et le maintien en pression au moment du refroidissement restent momentanément à la température de transformation de la matière utilisée, pendant que le reste des surfaces de l'empreinte est refroidi; ceci pour que le compactage et le maintien en pression soient le plus efficace possible, en agissant sur l'âme de la matière qui n'est pas encore solide. Ensuite, quant la quasi totalité de la pièce est refroidie ces zones sont elles aussi refroidies.

Les surfaces (5) sont pourvues d'évents raccordés à des pompes à vide ou des soupapes de décharge de pressions d'air. Les évents et pompes à vide permettront de mettre l'empreinte (7) en dépression pour éviter la formation de bulles d'air au moment du gavage.

Les surfaces (5) sont équipées de capteurs de pression et capteurs de température. Leur rôle sera dans un premier temps pour les capteurs de température de contrôler la température de la surface (5) de l'empreinte (7) avant le gavage. Dans un deuxième temps, ceux de pression liront le remplissage du moule (9) et ensuite ensemble permettront l'application d'un diagramme : pression, volume, température.

Pour le démoulage des soupapes à pression d'air ou de fluide des verins ou un système mécanique ou en association sera utile pour décoller la pièce des parois (5) de l'empreinte (7) des deux côtés du moule (9). Dans le cas cité, après un effort dans le sens bas-haut sur la partie supérieure, les soupapes à pression d'air travailleront simultanément avec l'effet des vérins qui agiront sur une faible course pour décoller la pièce de la partie supérieure du moule (9).

Ensuite, après ouverture partielle, l'opération analogue, vérins soupapes, sera reproduite. Après décollage total de la pièce des surfaces (5) de l'empreinte (7), la partie supérieure du moule (9) est retirée. La pièce est extraite du palan.

Le gavage et le maintien en pression pourra être effectué à l'aide d'extrudeuses (8), de groupes vis-pistons (6), de groupes pistons ou l'utilisation de tous types de transfert ou en association.

La partie avant ou le nez du ou des dispositifs de gavage ou la ou les parties du moule recevant ces dispositifs sont équipés d'obturateurs à boisseau ou de tout autre type de système de fermeture; conçus de telle façon que lorsque le gavage est effectué et que le compactage et le maintien en pression commencent, la matière ne soit pas refoulée dans le ou les dispositifs de gavage.

Dans le cas cité, le gavage se fait à l'aide d'extrudeuses (8) couplées et le compactage et maintien avec des groupes vis pistons (6).

A titre d'exemple, pour la réalisation de la coque d'un navire en polyéthylène, les températures sont de l'ordre de 240 ° C (+ -10° C).

## Revendications

1. Procédé permettant la réalisation de pièces de grandes et de très grandes dimensions en matières thermoplastiques; il consiste à gaver un moule (9) à l'aide d'extrudeuses (8), ensuite à appliquer, en différents endroits déterminés suivant un rapport épaisseur/surface, un compactage et une pression de maintien qui sont appliqués à l'aide de groupes vis-pistons (6) , débutant avec le refroidissement des surfaces (5) de l'empreinte (7)-,caractérisé en ce que les parois (5) de l'empreinte (7), avant le gavage, sont à une température comprise dans la fourchette de température de travail de la matière et que le compactage et le maintien en pression sont l'application d'un diagramme pression/volume/température.

2. Procédé selon la revendication 1., caractérisé en ce que le gavage, le compactage, le maintien en pression ou l'application d'un diagramme pression/volume/température sont effectués à l'aide d'extrudeuses (8) de groupes vis-pistons (6) de groupes pistons, ou à l'aide de tous types de transfert ou en association, la partie avant ou le nez du ou des dispositifs de gavage ou la ou les parties du moule recevant ces dispostifis sont équipés d'obturateurs à boisseau ou de tout autre type de système de fermeture.

3. Procédé selon la revendication 1., caractérisé en ce que l'énergie thermo-électrique et l'utilisation de fluides calorifiques sont utilisés pour le chauffage et le refroidissement des parois (5) de l'empreinte (7), les zones de contact surface/moule avec les dispositifs de compactage et maintien en pression sont régulés en température indépendamment des surfaces de l'empreinte.

4. Procédé selon la revendication 1., caractérisé en ce que l'empreinte (7) avant le gavage est vide d'air, en dépression d'air ou éventée.

5. Procédé selon la revendication 1., caractérisé en ce que les mouvements d'ouverture, de fermeture et de verrouillage sont effectués hydrauliquement mécaniquement, électriquement ou en association.

6. Procédé selon la revendication 1., caractérisé en ce que le démoulage de la pièce obtenue est effectué à l'aide de soupapes à pression d'air ou de fluides, de vérins ou d'un système mécanique ou en association.

7. Procédé selon la revendication 1., caractérisé en ce que la lecture des températures et des pressions se font avec l'utilisation de capteurs de pression et de température.

8. Procédé selon la revendication 1., caractérisé en ce que le moule (9) est de type connu ou en tôle, les matériaux qui constituent le moule sont des conducteurs thermiques qui peuvent être des alliages.

9. Procédé selon l'une quelconque des revendications précédentes, caractérisé en ce que le procédé est mis en oeuvre à partir de matières thermoplastiques, ou de matières thermodurcissables se transformant de la même façon que les thermoplastiques. Pour l'utilisation des matières thermodurcissables qui se transforment traditionnellement par injection, les températures sont définies à partir des critères tels que : la taille de l'empreinte, le volume, l'épaisseur maximum, la surface, le temps de remplissage, le type de matière utilisée.

10. Procédé selon l'une quelonque des revendications précédentes, pour la réalisation de la coque d'un navire (7) réalisée en polyéthylène, caractérisé en ce que les surfaces (5) de l'empreinte (7) sont à une température de 240° C (+ -10° C) et la matière qui gave l'empreinte (7) à l'aide d'extrudeuses (8) qui sont à la température de 240° C (+ -10° C) ainsi que les groupes vis-pistons qui effectuent le compactage, le maintien en pression ou l'application du diagramme pression/volume/température.

8

5

4
1

6
2

7

A

9

5

A

5 9

0 210 906

Fig. 1

COUPE AA

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 840 856 (S.K. MOXNESS) <br> * Colonne 1, lignes 15-57; colonne 4, lignes 64-66; colonne 3, lignes 48-54; revendications 5,6; figures 1,2 * | 1-10 | B 29 C 45/13 <br> B 29 C 45/57 |
| | --- | | |
| A | DE-A-2 331 426 (FANINI S.I.M. S.p.A.) <br> * Revendications 1,2,7-9; figures 1-4 * | 1-0 | |
| | --- | | |
| A | FR-A-1 473 150 (SOCIETE POUR LA TRANSFORMATION DES MATIERES PLATIQUES STAMP) <br> * Page 1, colonne de gauche, ligne 24 - page 1, colonne de droite, ligne 3; page 2, colonne de gauche, ligne 47 - page 2, colonne de droite, ligne 13; figures * | 1-10 | |
| | | | **DOMAINES TECHNIQUES RECHERCHES (Int. Cl.4)** |
| | --- | | B 29 C |
| A | FR-A-2 141 919 (R. HANNING) <br> * Revendications 1-6; figure * | 1,2,7 | |
| | --- | | |
| A | US-A-3 265 797 (A. SPAAK et al.) <br> * Colonne 1, lignes 64-72; figure * | 1,2 | |
| | --- | | |
| A | GB-A- 912 695 (G. FISCHER AG) <br> * Figures 2-10 * | 1,2 | |
| | ---     -/- | | |

Le présent rapport de recherche a été établi pour toutes les revendications

| Lieu de la recherche <br> LA HAYE | Date d'achèvement de la recherche <br> 06-11-1986 | Examinateur <br> BELIBEL C. |
|---|---|---|

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 571 856 (W.D.VOELKER)<br>* Figure 1 *<br><br>--- | 1,2 | |
| A | DE-A-2 513 594<br>(SCHLOEMANN-SIEMAG AG)<br>* Figures 1,2 *<br><br>--- | 1,2 | |
| A | US-A-2 781 547 (S.K. MOXNESS)<br>* Colonne 3, lignes 22-62; revendications; figures 1,2 *<br><br>--- | 1-3 | |
| A | DE-A-2 321 634 (FA.J.J. VOWINCKEL)<br>* Revendications *<br><br>--- | 1-3 | |
| A | FR-A-1 432 150 (S. STÜBBE)<br>* Page 2, colonne de droite, lignes 15-17; figures 1-3 *<br><br>--- | 1-3 | DOMAINES TECHNIQUES RECHERCHES (Int. Cl.4) |
| A | GB-A-1 023 888 (K.K. MEIKI SEISAKUSHO)<br>* Figures 1,2 *<br><br>--- | 1-3 | |
| A | EP-A-0 022 009 (SOCIETE LYONNAISE DE VENTILATION INDUSTRIELLE SOLYVENT-VENTEC)<br>* Figures 1-3,5 *<br><br>---      -/- | 1-3 | |

Le présent rapport de recherche a été établi pour toutes les revendications

| Lieu de la recherche<br>LA HAYE | Date d'achèvement de la recherche<br>06-11-1986 | Examinateur<br>BELIBEL C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

OEB Form 1503 03 82

## DOCUMENTS CONSIDERES COMME PERTINENTS

Page  3

| Catégorie | Citation du document avec indication, en cas de besoin, des parties pertinentes | Revendication concernée | CLASSEMENT DE LA DEMANDE (Int. Cl.4) |
|---|---|---|---|
| A | PLASTICS ENGINEERING, vol. 34, no. 8, août 1978, pages 25-28; J.F. KEEGAN: "Proper mold venting is one answer to costly parts rejection" | 4 | |
| | ----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 06-11-1986 | BELIBEL C. |